# EUROPEAN PATENT APPLICATION

(11) **EP 0 576 823 A1**
(43) Date of publication of application: **05.01.1994**
(21) Application number: 93108215.0
(22) Date of filing: 19.05.1993
(51) Int. Cl.: B21D 43/20, B21D 43/24

(54) **Unit for feeding semifinished parts to a forming machine, particularly a press**

(30) Priority: 29.05.1992 IT TO920464
(71) Applicant: COMAU S.p.A., I-10095 Grugliasco (Torino) (IT)
(72) Inventor: Marinoni, Giorgio, I-10143 Torino (IT); Baroncelli, Arturo, I-12023 Caraglio (IT)
(74) Representative: Plebani, Rinaldo

(57) **Abstract**

A unit for feeding semifinished parts (3), whereby a carriage (40) travelling along a straight slideway (9) supports a rectangular table (42) in turn supporting a parallelepiped stack (44) of semifinished parts (3) and which is floatable by means of an air cushion (45). The carriage (40) presents a device (50) for positioning the stack (44) and comprising four articulated arms (57), each fitted to the carriage (40) and having, on its free end, a locating element (54) designed to contact the lateral walls of the stack (44).

## Description

The present invention relates to a unit for feeding semifinished parts to a forming machine, particularly a press.

Known feed units of the aforementioned type comprise a loading station in which a stack of semifinished parts is loaded on to a carriage; and an unloading station in which the parts are gripped and withdrawn one by one off the stack by a handling device and fed on to the press.

The efficiency of known units of the aforementioned type depends on the accuracy with which the stack is positioned on the carriage, any errors in which affect the pickup position of the handling device in relation to the part.

To overcome the above drawback, self-adjusting devices are provided for determining the position of the stack in relation to the carriage by means of a number of sensors connected to a processing unit, which recalculates the zero position of the handling robot to compensate for any error in the position of the stack.

In addition to the complex design and, hence, high cost involved, such devices are also difficult to regulate.

It is an object of the present invention to provide a semifinished part feed unit enabling straightforward, correct positioning of the stack.

According to the present invention, there is provided a unit for feeding semifinished parts to a forming machine, particularly a press, and comprising loading means for supporting a substantially neat stack of said semifinished parts;
said loading means moving between at least a loading station and an unloading station featuring gripping means for withdrawing said semifinished parts one by one; characterized by the fact that said loading means comprise a carriage, and a table for supporting said stack;
said unit also comprising means for positioning said stack in relation to said carriage.

According to the present invention, there is also provided a method of positioning a substantially neat stack of semifinished parts supported on a table in turn supported on a carriage in a unit for feeding semifinished parts to a forming machine, particularly a press; characterized by the fact that it comprises:
a first stage wherein a reference body is positioned on said table;
a second stage wherein a positioning device, comprising at least three arms with locating ends, is positioned with said ends contacting the walls of said reference body;
a third stage wherein the positions of said ends in relation to said carriage are memorized;
a fourth stage wherein said articulated arms are withdrawn from said reference body, and said reference body is removed from said table;
a fifth stage wherein a stack of semifinished parts is placed on said table, and the table is rendered floating;
a sixth stage wherein said articulated arms are brought up to said stack, and said ends are set to the same position measured previously in relation to said carriage;
a seventh stage wherein said stack is positioned manually by moving said table, and its walls are positioned contacting said ends;
an eighth stage wherein the supporting device is de-activated, and said table is rendered integral with said carriage.

A preferred, non-limiting embodiment of the present invention will be described by way of example with reference to the accompanying drawings, in which:
Fig.1 shows a partial plan view of a preferred embodiment of a unit for feeding semifinished parts to a press in accordance with the present invention;
Fig.2 shows a partial side view of the Fig.1 feed unit;
Fig.3 shows a partial side view of the Fig.1 feed unit in a different operating position.

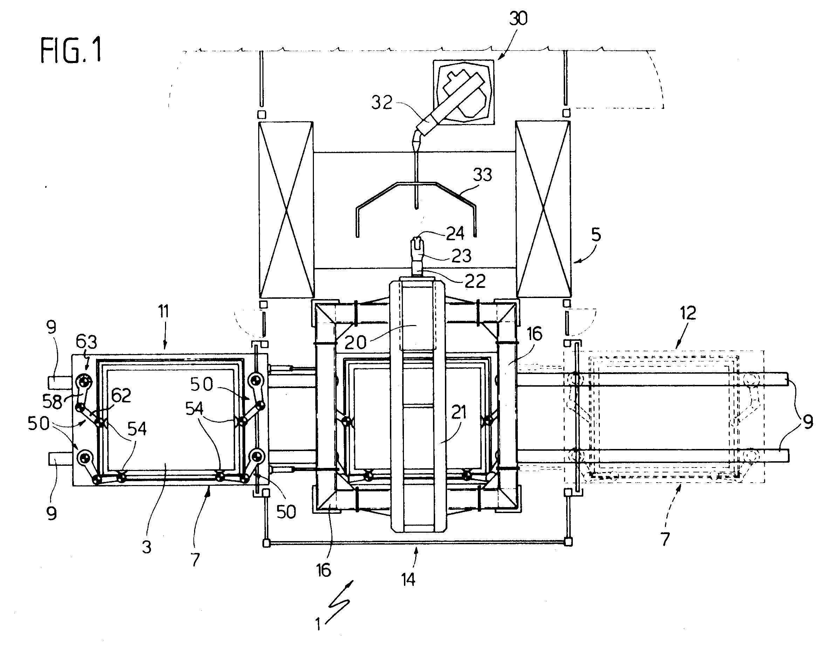

Number 1 in Fig.1 indicates a unit for feeding semifinished parts 3, conveniently flat rectangular sheets arranged one on top of the other, to a press 5 (shown schematically).

Feed unit 1 comprises two slides 7 running back and forth, along a straight slideway 9, between first and second diametrically-opposed loading stations 11, 12, wherein slides 7 are illustrated respectively by continuous and dotted lines; and an unloading station 14 located halfway along slideway 9 between stations 11 and 12.

Unloading station 14 is located opposite press 5, and comprises a metal frame 16 supporting a gripping robot 20 travelling along a straight slideway 21 over slideway 9. Robot 20 presents an articulated gripping arm 22 (shown partially in Fig.1) terminating in a gripping head 23 with a suction cup 24 for gripping parts 3 one by one off slide 7 and feeding them on to press 5.

Fig.1 also shows an unloading robot 30 located to the side of press 5, on the opposite side to unloading station 14, and having a movable arm 32 terminating in a gripping fork 33 for gripping and withdrawing pressed parts 3 off press 5.

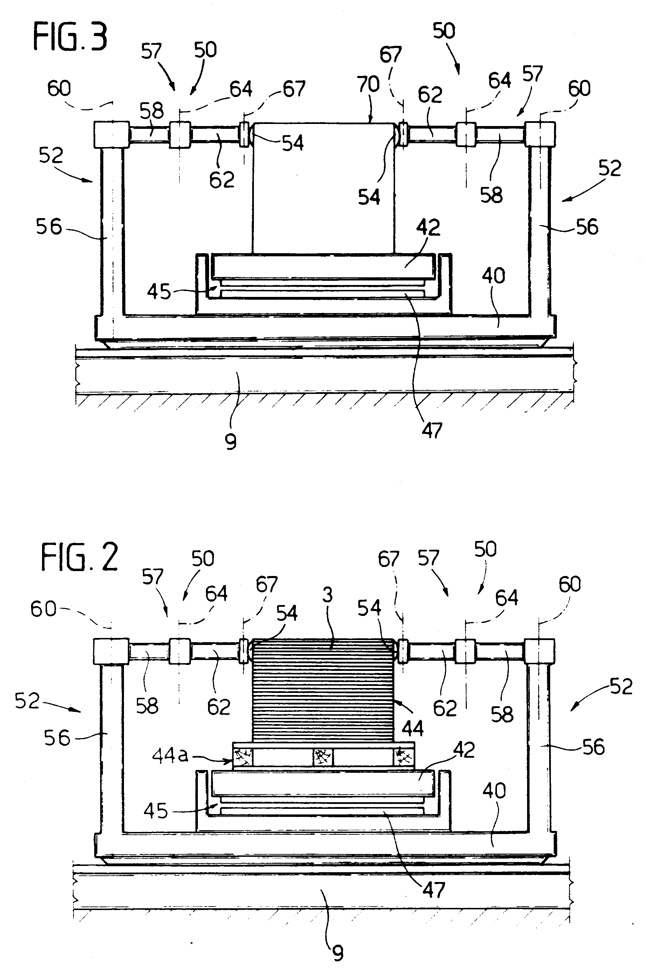

As shown in Fig.2, each slide 7 comprises a rectangular carriage 40 running along slideway 9 and supporting a rectangular table 42 in turn supporting a parallelepiped stack 44 of parts 3 on a pallet 44a. Slides 7 present a pneumatic device 45 for temporarily supporting table 42 and comprising a number of nozzles 47 on the upper surface of carriage 40 for blowing compressed air on to the wall of table 42 facing carriage 40, and so raising table 42.

Each slide 7 also presents a device 50 for positioning stack 44 in relation to carriage 40 and comprising four elements 52 fitted in twos along opposite straight edges of carriage 40.

Each element 52 comprises a vertical supporting column structure 56 extending perpendicular to carriage 40 and fitted on the top end with an articulated arm 57 perpendicular to structure 56 and extending towards stack 44.

Each articulated arm 57 comprises a first arm 58 movable angularly about a vertical axis 60 in relation to structure 56, and connected in angularly-movable manner to a first end of a second arm 62. Arm 62 rotates about a vertical axis 64 in relation to arm 58, and is fitted on its second free end with a locating element 54 pivoting about a vertical axis 67 in relation to arm 62. Elements 54 are defined by a flat locating surface (not shown) positionable tangent to the walls of stack 44, as described later on.

Prior to use, device 50 is subjected to a setting operation wherein (Fig.3) a reference body (model) 70 of the same size as stack 44 of parts 3 is placed on table 42. Body 70 is set in relation to carriage 40 (in known manner, e.g. by means of locating elements) to a given reference position ensuring correct unloading of parts 3 in station 14.

Positioning device 50 is then adjusted manually, and arms 57 are rotated to position the locating surfaces of elements 54 tangent to the walls of body 70, by rotating arms 58 and 62 about respective axes 60 and 64. When elements 54 are all positioned contacting body 70, arms 58 are made integral with respective arms 62 (e.g. by inserting a lock pin), and the angular position of the four arms 58 in relation to respective structures 56 is measured by means of a graduated scale 63 on structure 56 (Fig.1).

Articulated arms 57 are then withdrawn from body 70 by rotating them about axis 60, and body 70 is removed from table 42, at which point, positioning device 50 is ready for use.

Stack 44 is then placed on table 42, which is subsequently raised and rendered floating by activating pneumatic device 45.

At this point, articulated arms 57 are moved up to stack 44, and arms 58 (integral with arms 62) are set to the same angular position measured previously in relation to structure 56, so that elements 54 are all set to the same position as at the setting stage in relation to carriage 40.

Stack 44 is then moved manually, by displacing floating table 42, until the lateral walls of stack 44 are positioned tangent to all of elements 54, in which position, stack 44 is set to the reference position in relation to carriage 40. At this point, pneumatic device 45 is de-activated and table 42 lowered on to carriage 40.

The feed unit according to the present invention thus provides, in an extremely straightforward manner, for positioning stack 44 of parts 3 in relation to carriage 40 and, hence, in relation to unloading station 14.

To those skilled in the art it will be clear that changes may be made to the feed unit as described and illustrated herein without, however, departing from the scope of the present invention.

## Claims

1. A unit (1) for feeding semifinished parts (3) to a forming machine, particularly a press (5), and comprising loading means (40, 42) for supporting a substantially neat stack (44) of said semifinished parts (3);
said loading means (40, 42) moving between at least a loading station (11, 12) and an unloading station (14) featuring gripping means (20) for withdrawing said semifinished parts (3) one by one; characterized by the fact that said loading means comprise a carriage (40), and a table (42) for supporting said stack (44);
said unit (1) also comprising means for positioning said stack (44) in relation to said carriage (40).

2. A unit as claimed in Claim 1, characterized by the fact that said relative positioning means comprise supporting means (45) for floating said table (42) in relation to said carriage (40); and locating means (50) fitted to said carriage (40) and designed to contact portions of said stack (44).

3. A unit as claimed in Claim 3, characterized by the fact that said locating means comprise at least three elements (52), each having at least one end (54) designed to contact portions of said stack (44); said ends (54) being movable to and from respective predetermined adjustable contact positions.

4. A unit as claimed in Claim 3, characterized by the fact that each element (52) comprises an articulated arm (57) fitted to a supporting structure (56) integral with said carriage (40).

5. A unit as claimed in Claim 4, characterized by the fact that each articulated arm (57) comprises a first portion (58) movable angularly in relation to said supporting structure (56); said first portion (58) being connected in angularly-movable manner to a second portion (62) supporting said end (54).

6. A unit as claimed in any one of the foregoing Claims from 3 to 5, characterized by the fact that it comprises means (63) for memorizing the position of said ends (54) in relation to said carriage (40).

7. A unit as claimed in any one of the foregoing Claims from 2 to 6, characterized by the fact that said supporting means comprise an air cushion (45).

8. A method of positioning a substantially neat stack (44) of semifinished parts (3) supported on a table (42) in turn supported on a carriage (40) in a unit for feeding semifinished parts (3) to a forming machine, particularly a press (5); characterized by the fact that it comprises:
a first stage wherein a reference body (70) is positioned on said table (42);
a second stage wherein a positioning device (50), comprising at least three arms (57) with locating ends (54), is positioned with said ends (54) contacting the walls of said reference body (70);
a third stage wherein the positions of said ends (54) in relation to said carriage (40) are memorized;
a fourth stage wherein said articulated arms (57) are withdrawn from said reference body (70), and said reference body (70) is removed from said table (42);
a fifth stage wherein a stack (44) of semifinished parts (3) is placed on said table (42), and the table (42) is rendered floating;
a sixth stage wherein said articulated arms (57) are brought up to said stack (44), and said ends (54) are set to the same position measured previously in relation to said carriage (40);
a seventh stage wherein said stack (44) is positioned manually by moving said table (42), and its walls are positioned contacting said ends (54);
an eighth stage wherein the supporting device (45) is de-activated, and said table (42) is rendered integral with said carriage (40).
